# EUROPEAN PATENT APPLICATION

(11) **EP 2 615 287 A2**
(43) Veröffentlichungstag der Anmeldung: **17.07.2013**
(21) Anmeldenummer: 11823740.3
(22) Anmeldetag: 02.09.2011
(51) Int. Cl.: F02D 45/00, B60K 15/06, B60K 15/03

(54) **VERFAHREN ZUR DIAGNOSE VON KRAFTSTOFFTANKLECKS UND VORRICHTUNG ZUR ANWENDUNG DIESES VERFAHRENS**

(30) Priorität: 06.09.2010 KR 20100087133
(71) Anmelder: Continental Automotive GmbH, 30165 Hannover (DE)
(72) Erfinder: KIM, Han Cin, Seoul 143-200 (KR); SON, Yong Joon, Icheon-si Gyeonggi-do 467-741 (KR)
(86) Internationale Anmeldenummer: PCT/KR2011/006516
(87) Internationale Veröffentlichungsnummer: WO 2012/033307

(57) **Zusammenfassung**

Vorliegende Erfindung stellt eine Diagnosemethode für Lecks bei Treibstofftanks und eine diese anwendende Vorrichtung vor. Die Diagnosemethode für Lecks bei Treibstofftanks gemäß vorliegender Erfindung ist so gestaltet, dass der Druck im Treibstofftank eines sich in Betrieb befindlichen Fahrzeugs an den Leck-Diagnosedruck im Treibstofftank angepasst, und dass direkt beim Anhalten des Fahrzeugs eine Leck-Diagnose für den Treibstofftank durchgeführt werden kann. Deshalb kann vorliegende Erfindung den Druck im Treibstofftank eines Fahrzeuges bereits vor dem Anhalten des Fahrzeugs an den Leck-Diagnosedruck des Treibstofftankes anpassen und einfach diagnostizieren, ob im Treibstofftank ein Leck ist oder nicht, selbst wenn Situationen eintreten, dass das Fahrzeug anhält, aber zum Beispiel nicht in den dem haltenden Fahrzeug entsprechenden Zustand übergehen kann, oder die Genauigkeit der Diagnose erhöht werden muss. Eine Leck-Diagnose für den Treibstofftank kann durchgeführt werden.

## Beschreibung

### Technisches Gebiet

Die vorliegende Erfindung betrifft eine Diagnosemethode für Lecks bei Treibstofftanks und eine diese anwendende Vorrichtung, genauer: eine Diagnosemethode für Lecks bei Treibstofftanks und eine diese anwendende Vorrichtung, welche durch Anpassen des Drucks im Treibstofftank eines in Betrieb befindlichen Fahrzeugs an den Leck-Diagnosedruck im Treibstofftank direkt beim Anhalten des Fahrzeugs eine Leck-Diagnose für den Treibstofftank durchführen kann.

### Stand der Technik

Insbesondere führt die Diagnose für Lecks bei Treibstofftanks, nachdem beim Anhalten des Fahrzeugs im Treibstofftank ein Unterdruck entstanden ist, ausgehend von einem erhöhten Druck im Treibstofftank bei abgeschaltetem Treibstofftank eine Diagnose nach einem Leck im Treibstofftank durch.

Jedoch für den Fall, dass bei einem durch Umweltbedingungen zum Anhalten gekommenen Fahrzeug das Entwickeln eines Unterdrucks im Treibstofftank nicht möglich ist, war eine Diagnose von Lecks in Treibstofftanks mit herkömmlichen Techniken sehr stark begrenzt.

### Detaillierte Beschreibung der Erfindung

### Technische Aufgabe

Die vorliegenden Erfindung wurde zur Lösung der o. g. Probleme entworfen, folglich ist es Ziel der vorliegenden Erfindung, eine Diagnosemethode für Lecks bei Treibstofftanks und eine diese anwendende Vorrichtung zu bieten, welche den Druck im Treibstofftank eines in Betrieb befindlichen Fahrzeugs an den Leck-Diagnosedruck im Treibstofftank anpassen, und entsprechend der durchgeführten Leck-Diagnose für den Treibstofftank, sobald das Fahrzeug anhält, eine schnelle Leck-Diagnose für den Treibstofftank durchführen können, und auch in dem Fall, dass bei der Leck-Diagnose für den Treibstofftank kein Unterdruck möglich war, eine Leck-Diagnose für den Treibstofftank durchführen können, sodass durch Regulieren des Drucks im Treibstofftank eines in Betrieb befindlichen Fahrzeugs direkt beim Anhalten des Fahrzeugs eine Leck-Diagnose für den Treibstofftank durchgeführt wird.

### Mittel zur Lösung der Aufgabe

Die Diagnosemethode für Lecks bei Treibstofftanks entsprechend dem 1. Gesichtspunkt der vorliegenden Erfindung zur Erreichung der o. g. Ziele ist dadurch gekennzeichnet, dass sie folgende Stufen umfasst:

eine 1. Beurteilungsstufe, in der beurteilt wird, ob die 1. Bedingungen erfüllt sind, um in der Diagnosevorrichtung den Druck im Treibstofftank eines in Betrieb befindlichen Fahrzeugs zu regeln;
eine 2. Beurteilungsstufe, in der beurteilt wird, ob die 2. Bedingungen erfüllt sind, um die Regelung für den Druck im Treibstofftank eines im Betriebszustand befindlichen Fahrzeugs zu starten, sobald o. g. 1. Bedingungen erfüllt sind;
eine Druckanpassungsstufe, in der der Druck in o. g. Treibstofftank an den vorab festgelegten o. g. Zieldruckwert für den Treibstofftank angepasst wird, sobald o. g. 2. Bedingungen erfüllt sind;
sowie eine Leck-Diagnosestufe, in der ausgehend von dem Druck im Treibstofftank, der o. g. Zieldruckwert erreicht hat, eine Leck-Diagnose für o. g. Treibstofftank durchgeführt wird, sobald das Fahrzeug anhält.

Vorzugsweise ist o. g. Diagnosemethode für Lecks bei Treibstofftanks dadurch gekennzeichnet, dass sie auch eine Stufe umfasst, in der - sobald Änderungen bei den von o. g. im Betriebszustand befindlichen Fahrzeug abgegeben Betriebsdaten vorliegen - entsprechend den veränderten Betriebsdaten der Zieldruckwert des Treibstofftanks geändert wird.

Vorzugsweise sind o. g. Betriebsdaten dadurch gekennzeichnet, dass sie mindestens mehr als 1 Angabe zur Geschwindigkeit, zur Ansaugluftmenge sowie der Motorlast des o. g. Fahrzeugs, umfassen.

Vorzugsweise sind o. g. 1. Bedingungen dadurch gekennzeichnet, dass sie mehr als 1 der folgenden Abfragen umfassen: Ist bei der Tankentlüftungsventil, Tankabsperrventil, Tankdrucksensor und Tankfüllstandsensor umfassenden Diagnosevorrichtung für Lecks bei Treibstofftanks ein Fehler aufgetreten? Wurde die Kühltemperatur des Treibstoffs unterhalb einer vorab festgelegten Temperatur gemessen? Liegt die elektrische Spannung der Batterie innerhalb des Bereiches, der vorab für die Spannung bei Normalbetrieb festgelegt worden ist? Liegt die gemessene Treibstoffmenge innerhalb des Bereiches, der vorab für die messbare Treibstoffmenge festgelegt worden ist? Muss innerhalb einer bestimmten Zeit getankt werden?

Vorzugsweise sind o. g. 2. Bedingungen dadurch gekennzeichnet, dass sie mehr als 1 der folgenden Abfragen umfassen: Ist die Öffnungssteuerung für das Tankentlüftungsventil wiederholt durchlaufen, um den Druck in o. g. Treibstofftank zu verringern? Wurde der für das Öffnen des o. g. Tankentlüftungsventils vorab festgelegte Level erreicht? Liegt der Druck in o. g. Treibstofftank innerhalb des vorab festgelegten Toleranzbereichs? Liegen die Veränderungen beim Druck in o. g. Treibstofftank innerhalb der vorab festgelegten Variabilitätsspanne? Liegt die Motorlast unterhalb der vorab festgelegten Last?

Vorzugsweise ist o. g. Druckanpassungsstufe dadurch gekennzeichnet, dass sie durch die Öffnungssteuerung für das Tankentlüftungsventil den Druck in o. g. Treibstofftank verringert, sobald ein Druck in o. g. Treibstofftank entsteht, dadurch dass o. g. Zieldruckwert überschritten worden ist.

Vorzugsweise ist o. g. Druckanpassungsstufe dadurch gekennzeichnet, dass sie durch die Öffnungssteuerung für das Tankabsperrventil den Druck in o. g. Treibstofftank erhöht, sobald ein Druck in o. g. Treibstofftank entsteht, der unterhalb des o. g. Zieldruckwertes liegt.

Vorzugsweise ist o. g. Druckanpassungsstufe dadurch gekennzeichnet, dass sie eine Anpassung für den Druck in o. g. Treibstofftank durchführt, sofern der Fehlerwert - das Ergebnis aus dem Vergleich zwischen dem Wert des Drucks in o. g. Treibstofftank und dem o. g. Zieldruckwert - außerhalb der vorab eingestellten Hysterese (Hysteresis) liegt.

Vorzugsweise ist o. g. Leck-Diagnosestufe dadurch gekennzeichnet, dass sie die Leck-Diagnose für o. g. Treibstofftank unterbricht, bis der Druck in o. g. Treibstofftank o. g. Zieldruckwert erreicht, sofern beim Anhalten des Fahrzeugs eine Verringerung des Drucks in o. g. Treibstofftank auf o. g. Zieldruckwert nicht erreicht worden ist.

Die Diagnosevorrichtung für Lecks bei Treibstofftanks entsprechend dem 2. Gesichtspunkt der vorliegenden Erfindung zur Erreichung der o. g. Ziele ist dadurch gekennzeichnet, dass sie folgende Bereiche umfasst:
einen 1. Beurteilungsbereich, in dem beurteilt wird, ob die 1. Bedingungen erfüllt sind, um in der Diagnosevorrichtung den Druck im Treibstofftank eines in Betrieb befindlichen Fahrzeugs zu regeln;
einen 2. Beurteilungsbereich, in dem beurteilt wird, ob die 2. Bedingungen erfüllt sind, um die Regelung für den Druck im Treibstofftank eines im Betriebszustand befindlichen Fahrzeugs zu starten, sobald o. g. 1. Bedingungen erfüllt sind;
einen Regelungsbereich, in dem der Druck in o. g. Treibstofftank an den vorab festgelegten o. g. Zieldruckwert für den Treibstofftanks angepasst wird, sobald o. g. 2. Bedingungen erfüllt sind;
sowie einen Diagnosebereich, in dem ausgehend von dem Druck im Treibstofftank, der o. g. Zieldruckwert erreicht hat, eine Leck-Diagnose für o. g. Treibstofftank durchgeführt wird, sobald das Fahrzeug anhält.

Vorzugsweise ist o. g. Diagnosevorrichtung für Lecks bei Treibstofftanks dadurch gekennzeichnet, dass sie auch einen Anpassungsbereich umfasst, in dem - sobald Änderungen bei den von o. g. im Betriebszustand befindlichen Fahrzeug abgegebenen Betriebsdaten vorliegen - entsprechend den veränderten Betriebsdaten der Zieldruckwert des Treibstofftanks geändert wird.

### Wirkung der Erfindung

Folglich liegen die Vorteile der vorliegenden Erfindung in nachfolgenden Aspekten:
Es kann einfach diagnostiziert werden, ob ein Leck im Treibstofftank vorhanden ist, selbst wenn Situationen eintreten, dass zum Beispiel das anhaltende Fahrzeug nicht in den dem haltenden Fahrzeug entsprechenden Zustand übergehen kann, oder die Genauigkeit der Diagnose erhöht werden muss. Dies geschieht, indem bei haltendem Fahrzeug der Druck im Treibstofftank geregelt wird und dadurch eine Leck-Diagnose für den Treibstofftank direkt beim Anhalten des Fahrzeugs durchgeführt werden kann.
Bereits vor dem Anhalten des Fahrzeugs wird der Druck im Treibstofftank des Fahrzeugs geprüft und entsprechend angepasst, sodass direkt wenn das Fahrzeug anhält eine Leck-Diagnose für den Treibstofftank durchgeführt werden kann. Dies geschieht, indem der Druck für den Treibstofftank des nun haltenden Fahrzeugs an den der Leck-Prüfung am Treibstofftank entsprechenden Druck angepasst wird.

### Einfache Beschreibung zu den Abbildungen

Die folgenden der vorliegenden Beschreibung beigefügten Abbildungen führen bevorzugte Ausführungsbeispiele für vorliegende Erfindung an und verdeutlichen zusammen mit der später folgenden ausführlichen Beschreibung der Erfindung die technische Idee der vorliegenden Erfindung; die vorliegende Erfindung ist dabei nicht auf die Ausführungsbeispiele in den Abbildungen beschränkt.

Abbildung 1 ist ein Aufbauschema, welches den Aufbau für die Leck-Diagnose an Treibstofftanks gemäß der vorliegenden Erfindung als ein Ausführungsbeispiel darstellt;

Abbildung 2 ist ein Aufbauschema, welches den Aufbau einer wie in Abbildung 1 gezeigten Diagnosevorrichtung als ein Ausführungsbeispiel darstellt;

Abbildung 3 ist ein Ablaufschema, welches den Betriebsablauf einer wie in Abbildung 1 gezeigten Diagnosevorrichtung als ein Ausführungsbeispiel darstellt;

### Bevorzugte Form für die Ausführung der Erfindung

Im Folgenden werden unter Bezug auf die beigefügten Abbildungen bevorzugte Ausführungsbeispiele für eine Diagnosevorrichtung zur Leck-Diagnose an Treibstofftanks (100) gemäß vorliegender Erfindung noch ausführlicher beschrieben.

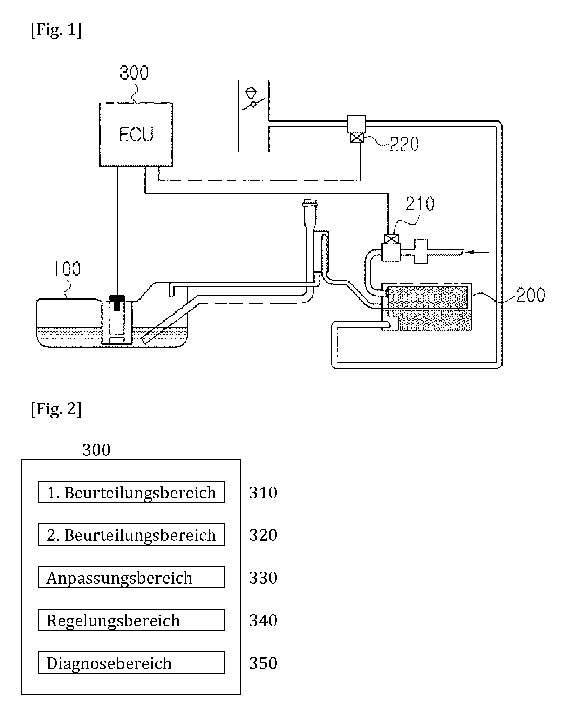

Abbildung 1 ist ein Aufbauschema, welches den Aufbau für die Leck-Diagnose an einem Treibstofftank (100) gemäß der vorliegenden Erfindung als ein Ausführungsbeispiel darstellt. Wie in Abbildung 1 nur als Beispiel beschrieben, umfasst der Aufbau für eine Leck-Diagnose an einem Treibstofftank (100) einen den Treibstoff aufbewahrenden Treibstofftank (100), einen den Druck im Treibstofftank (100) messenden Sensor, eine den durch den Betrieb der Einspritzanlage zugeführten Treibstoff verbrennende Brennkammer, einen die Regelung durchführenden Behälter (200), der - dadurch dass er die im Treibstofftank (100) entstehenden Verdunstungsgase sammelt - verhindert, dass die Verdunstungsgase in die Umwelt abgegeben werden, indem ihm über den Ansaugstutzen die nach dem Motorstart in der Brennkammer angesammelten Verdunstungsgase zugeführt werden, ein Tankentlüftungsventil (220), um zu regeln, dass die durch eine Seite einer die Brennkammer und den Behälter (200) verbindendenden Leitung von der Brennkammer in den Behälter (200) geführte Verdunstungsgas abgelassen werden, ein Tankabsperrventil (210), um den Druck im Treibstofftank (100) zu erhöhen, sowie eine elektronische Steuereinheit (300), um die Steuerung für das Öffnen und Schließen des Tankentlüftungsventils (220) und des Tankabsperrventils (210) durchzuführen.

Dabei ist die elektronische Steuereinheit (300) als Diagnosevorrichtung zur Durchführung der Leck-Diagnose am Treibstofftank (100) ein wichtiger Bestandteil, um den Druck im Treibstofftank eine in Betrieb befindlichen Fahrzeugs dem der Leckprüfung am Treibstofftank entsprechenden Druck anzupassen. Das heißt, hier übernimmt die elektronische Steuereinheit (300) die Aufgabe einer Diagnosevorrichtung, um ein Leck im Treibstofftank (100) direkt beim Anhalten des Wagens zu diagnostizieren, indem sie, während sich das Fahrzeug in Betrieb befindet, den Druck im Treibstofftank (100) regelt.

Deshalb führt o. g. elektronische Steuereinheit (300) - basierend auf der Anpassung des Drucks für den Treibstofftank eines Fahrzeugs an den der Leckprüfung am Treibstofftank entsprechenden Druck bereits vor Anhalten des Fahrzeugs - direkt beim Anhalten des Fahrzeugs eine Leck-Diagnose für den Treibstofftank durch.

Abbildung 2 ist ein Aufbauschema, welches den Aufbau einer wie in Abbildung 1 gezeigten Diagnosevorrichtung als ein Ausführungsbeispiel darstellt. Wie in Abbildung 2 nur als Beispiel beschrieben, umfasst der Aufbau der als Diagnosevorrichtung fungierenden elektronischen Steuereinheit (300) einen 1. Beurteilungsbereich (310), in dem beurteilt wird, ob die 1. Bedingungen erfüllt sind, um den Druck im Treibstofftank eines in Betrieb befindlichen Fahrzeugs zu regeln;
einen 2. Beurteilungsbereich (320), in dem beurteilt wird, ob die 2. Bedingungen erfüllt sind, für die Abfrage, ob die Regelung für den Druck im Treibstofftank (100) eines in Betrieb befindlichen Fahrzeugs zu starten ist, sobald die 1. Bedingungen erfüllt sind; einen Regelungsbereich (340), in dem der Druck im Treibstofftank (100) an den vorab festgelegten Zieldruckwert für den Treibstofftank (100) angepasst wird, sobald die 2. Bedingungen erfüllt sind; sowie einen Diagnosebereich (350), in dem - ausgehend von dem Druck im Treibstofftank (100), der den vorab bereits festgelegten Zieldruckwert des Treibstofftanks (100) erreicht hat - eine Leck-Diagnose für o. g. Treibstofftank durchgeführt wird, sobald das Fahrzeug anhält.

Das heißt, einschließlich eines 1. Beurteilungsbereichs, in dem beurteilt wird, ob die 1. Bedingungen erfüllt sind, um in der Diagnosevorrichtung den Druck im Treibstofftank eines in Betrieb befindlichen Fahrzeugs zu regeln,
eines 2. Beurteilungsbereichs, in dem beurteilt wird, ob die 2. Bedingungen erfüllt sind, um die Regelung für den Druck im Treibstofftank eines im Betriebszustand befindlichen Fahrzeugs zu starten, sobald o. g. 1. Bedingungen erfüllt sind,
eines Regelungsbereichs, in dem der Druck in o. g. Treibstofftank an den vorab festgelegten o. g. Zieldruckwert für den Treibstofftank angepasst wird, sobald o. g. 2. Bedingungen erfüllt sind, sowie eines Diagnosebereichs, in dem ausgehend von dem Druck im Treibstofftank, der o. g. Zieldruckwert erreicht hat, eine Leck-Diagnose für o. g. Treibstofftank durchgeführt wird, sobald das Fahrzeug anhält, umfasst o. g. Diagnosevorrichtung für Lecks bei Treibstofftanks auch einen Anpassungsbereich, in dem - sobald Änderungen bei den von o. g. in Betrieb befindlichen Fahrzeug abgegebenen Betriebsdaten vorliegen - entsprechend den veränderten Betriebsdaten der Zieldruckwert des Treibstofftanks geändert wird.

Dabei kann die Logik, nach der die im Diagnosebereich (350) durchgeführte Leck-Diagnose für den Treibstofftank (100) bei anhaltendem Fahrzeug begonnen und beendet wird, parallel zu herkömmlichen Prozessen ausgeführt werden.

Darüber hinaus ist es zu bevorzugen, dass die elektronische Steuereinheit (300) - sobald Änderungen bei den von in Betrieb befindlichen Fahrzeug abgegebenen Betriebsdaten vorliegen - entsprechend den veränderten Betriebsdaten den Zieldruckwert des Treibstofftanks (100) ändert.

Das heißt, es ist möglich, dass die elektronische Steuereinheit (300) auch einen Anpassungsbereich (330) umfasst, der so gestaltet ist, dass er den Zieldruckwert des Treibstofftanks (100) ändert.

Dabei bedeuten die 1. Bedingungen, dass sie mehr als 1 der folgenden Abfragen umfassen: Ist bei der Tankentlüftungsventil, Tankabsperrventil, Tankdrucksensor und Tankfüllstandsensor umfassenden Diagnosevorrichtung für Lecks bei Treibstofftanks ein Fehler aufgetreten? Wurde die Kühltemperatur des Treibstoffs unterhalb einer vorab festgelegten Temperatur gemessen? Liegt die elektrische Spannung der Batterie innerhalb des Bereiches, der vorab für die Spannung bei Normalbetrieb festgelegt worden ist? Liegt die gemessene Treibstoffmenge innerhalb des Bereiches, der vorab für die messbare Treibstoffmenge festgelegt worden ist? Muss innerhalb einer bestimmten Zeit getankt werden? Das heißt, um alle Punkte vor dem Start des Prozesses zur Steuerung des Drucks im Treibstofftank (100) eines in Betrieb befindlichen Fahrzeugs vorab zu beurteilen, sollten die 1. Bedingungen mehr als mindestens eine Bedingung aus den folgenden Abfragen umfassen: Sind bei Vorrichtungen, die im Zusammenhang mit der Leck-Diagnose für den Treibstofftank (100) stehen, wie etwa dem Tankentlüftungsventil (220), dem Tankabsperrventil (210), dem Drucksensor für den Treibstofftank (100) oder dem Füllstandsensor für den Treibstofftank (100), Fehler aufgetreten? Ist der Treibstoff ausreichend kühl (Dies lässt sich anhand der Temperatur zum Zeitpunkt des Ausschaltens und Startens des Motors oder anhand der verstrichenen Zeit nach dem Ausschalten des Motors beurteilen)? Sind die Bedingungen der Außentemperatur beim Motorstart angemessen? Ist die elektrische Spannung der Batterie angemessen (zum Beispiel, 10 Volt < Spannung < 16 Volt)? Ist die Treibstoffmenge angemessen? Ist Treibstoff neu getankt worden?

Noch konkreter gesagt, kann bei den 1. Bedingungen die Abfrage, ob die Kühltemperatur des Treibstoffes unterhalb einer vorab festgelegten Temperatur liegt, dadurch beurteilt werden, ob mehr als eine der folgenden Bedingungen erfüllt sind: Bedingungen für die Kühlwassertemperatur wenn der Motorstart abgeschaltet wird; Bedingungen für die Kühlwassertemperatur zum Zeitpunkt des Motorstarts; verstrichene Zeit während der Motorstart abgeschaltet worden ist; Bedingungen für die Ansaugtemperatur wenn der Motorstart abgeschaltet wird; Bedingungen für die Ansaugtemperatur wenn sich der Motorstart ausdehnt; Bedingungen für die Temperatur des Motoröls wenn der Motorstart abgeschaltet wird; Bedingungen für die Temperatur des Motoröls wenn sich der Motorstart ausdehnt; Bedingungen für die Außentemperatur wenn der Motorstart abgeschaltet wird; Bedingungen für die Außentemperatur wenn sich der Motorstart ausdehnt.

Des Weiteren wird bei den 1. Bedingungen beurteilt, ob die elektrische Spannung der Batterie innerhalb des Spannungsbereiches liegt, der vorab für den Normalbetrieb festgelegt worden ist. Dabei ist für die Spannung der Batterie im Normalbetrieb der Bereich von 10 bis 16 Volt eingestellt. Dieser Bereich der elektrischen Spannung der Batterie im Normalbetrieb kann je nach Bauweise und Betriebszustand des Fahrzeugs variabel eingestellt werden.

In gleicher Weise handelt es sich bei den 1. Bedingungen um Bedingungen, die Steuerwerte vorab prüfen, die erforderlich sind bei der Regelung des Drucks im Treibstofftank (100) bevor der Druck im Treibstofftank (100) eines in Betrieb befindlichen Fahrzeugs geprüft wird.

Ferner ist der 1. Beurteilungsbereich (310) vorzugsweise so gestaltet, dass er eine Rückmeldung gibt auf die unter den 1. Bedingungen befindliche Abfrage "Wurde die Kühltemperatur des Treibstoffs unterhalb einer vorab festgelegten Temperatur gemessen?", sobald der Motor gestartet wird.

Das heißt, es ist möglich, dass der 1. Beurteilungsbereich (310) feststellt, dass die Treibstofftemperatur im Treibstofftank (100) unterhalb eines vorab festgelegten Levels abgekühlt ist, weil der Motor auf einen vorab festgelegten Level abgekühlt ist - sofern die Veränderungen bei der Kühltemperatur des Treibstoffes innerhalb der Zeit, bis nach einem abgeschalteten Motorstart ein Neustart durchgeführt wird, einen vorab festgelegten zulässigen Standardwert übersteigen.

In dem Fall, dass in den Treibstofftank (100) zusätzlich Treibstoff getankt wird, und auch die Kühltemperatur des Treibstoffs unterhalb einer vorab festgelegten Temperatur gemessen wird, sollte der 1. Beurteilungsbereich (310) außerdem vorzugsweise beurteilen, dass die 1. Bedingungen nicht erfüllt sein können, sodass - sobald eine Treibstofftankung erkannt wird - in der Zeit, bis die Verdunstungsgase des Treibstofftanks (100) ausgeströmt und beseitigt sind, ein Leck im Treibstofftank (100) nicht diagnostiziert werden kann.

Andererseits bedeuten die sogenannten 2. Bedingungen, dass sie mehr als 1 der folgenden Abfragen umfassen: Ist die Öffnungssteuerung für das Tankentlüftungsventil wiederholt durchlaufen, um den Druck im Treibstofftank (100) zu verringern? Wurde der für das Öffnen des Tankentlüftungsventils vorab festgelegte Level erreicht? Liegt der Druck im Treibstofftank (100) innerhalb des vorab festgelegten Toleranzbereichs? Liegen die Veränderungen beim Druck im Treibstofftank (100) innerhalb der vorab festgelegten Variabilitätsspanne? Liegt die Motorlast unterhalb der vorab festgelegten Last?

Konkreter gesagt, bedeutet die zu den 2. Bedingungen zählende Abfrage - ob die Öffnungssteuerung für das Tankentlüftungsventil wiederholt durchlaufen ist, um dadurch den Druck im Treibstofftank (100) zu verringern - dass die Öffnungssteuerung für die Verringerung des Drucks im Treibstofftank (100) auf den Zieldruckwert wiederholt nach vorab festgelegten Schritten durchlaufen ist.

Der Grund dafür, dass die Bedingung der schrittweisen Öffnung des Tankentlüftungsventils (220) in den 2. Bedingungen enthalten ist, liegt darin, dass möglicherweise Probleme auftreten können - etwa Motorfehlzündungen, die durch vermischt mit der Ansaugluft einströmende Treibstoffverdunstungsgase verursacht werden - wenn das Tankentlüftungsventil (220) nicht durch die Öffnungssteuerung betrieben werden kann.

Des Weiteren ist die Öffnung des Tankentlüftungsventils (220) je nach Zustand des Fahrzeugs unterschiedlich. Bei haltendem Fahrzeug zum Beispiel wird der Druck im Treibstofftank (100) auf bis zu -15hPa verringert, und bei einem in Betrieb befindlichen Fahrzeug verändert sich der Zieldruckwert entsprechend der Fahrzeuggeschwindigkeit.

Denn dadurch kann bei einem sich in Betrieb befindlichen Fahrzeug das Entstehen von Verdunstungsgasen im Treibstofftank (100) unterdrückt werden, und - selbst wenn über einen langen Zeitraum hinweg Druck im Treibstofftank (100) beibehalten ist - eine Beschädigung des Treibstofftanks (100) verhindert werden.

Um eine Leck-Diagnose am Treibstofftank (100) unter der Bedingung eines haltenden Fahrzeugs durchzuführen, passt der Anpassungsbereich (330) den Zieldruckwert im Treibstofftank (100) entsprechend dem Betriebszustand des Fahrzeugs an, sodass bei haltendem Fahrzeug der Druck im Treibstofftank (100) sogar bis auf - 18hPa abfällt.

Dabei bedeuten die vom Betriebszustand eines Fahrzeugs abgegebenen Betriebsdaten mehr als 1 der Daten zu Fahrzeuggeschwindigkeit, Luftansaugmenge und Motorlast.

Der die Regelung des Drucks im Treibstofftank (100) ausführende Regelungsbereich (340) führt die Regelung so durch, dass für eine Senkung des Drucks im Treibstofftank (100) das Tankentlüftungsventil (220) geöffnet wird. Denn dadurch wird, sobald das Tankentlüftungsventil (220) geöffnet wird, der Druck im Treibstofftank (100) verringert, während gleichzeitig die Gase im Treibstofftank (100) vom Ansaugstutzen abgesaugt werden.

Andererseits veranlasst der Regelungsbereich (340), dass - falls aufgrund steigender Fahrzeuggeschwindigkeit über einen vorab festgelegten Level der Druck im Treibstofftank (100) ansteigt - das Tankabsperrventil (210) geöffnet wird, und dadurch Außenluft in den Treibstofftank (100) einströmt.

Danach, wenn der Druck im Treibstofftank (100) einen vorab festgelegten zulässigen Wert übersteigt, schließt der Regelungsbereich (340) das Tankabsperrventil (210) wieder.

In dieser Weise passt der Regelungsbereich (340) bei der Regelung des Drucks im Treibstofftank (100) unter Einsatz des Tankentlüftungsventils (220) und des Tankabsperrventils (210) den Druck im Treibstofftank (100) an, sobald der Druck im Treibstofftank (100) höher oder niedriger als der zulässige Wert ist.

Weiterhin stellt o. g. Diagnosebereich (350) bei haltendem Fahrzeug aufgrund des auf den Zieldruckwert geänderten Drucks im Treibstofftank (100) fest, ob ein Leck im Treibstofftank (100) vorhanden ist oder nicht.

Falls jedoch bei haltendem Fahrzeug eine Verringerung des Drucks im o. g. Treibstofftank auf o. g. Zieldruckwert nicht stattfindet, sollte o. g. Diagnosebereich (350) vorzugsweise die Leck-Diagnose für den Treibstofftank (100) solange unterbrechen, bis der Druck im Treibstofftank (100) o. g. Zieldruckwert erreicht hat.

Weiterhin ist es auch möglich, für den Zeitpunkt, wenn nach Anhalten des Fahrzeugs die Diagnose für den Treibstofftank (100) beginnen soll, den Diagnose-Zieldruckwert für den Treibstofftank (100) bei haltendem Fahrzeug und den Diagnose-Zieldruckwert für die Druckverringerung bei betriebenem Fahrzeug getrennt einzustellen.

Zusätzlich sind für den Druck im Treibstofftank (100) bei ausgeschaltetem Motor Einstellungen möglich für eine Verzögerungszeit, bis - unter Bezugnahme auf die wachsende Geschwindigkeit des Drucks im Treibstofftank (100) - festgestellt werden kann, ob es ein Leck im Treibstofftank (100) gibt oder nicht, und für eine Verzögerungszeit, in der - unter Bezugnahme auf die nachlassende Geschwindigkeit des Drucks im Treibstofftank (100) - eine Betriebsbereitschaft für die Durchführung der Leck-Diagnose aufrecht gehalten werden muss.

Das heißt, die sogenannte Verzögerungszeit bedeutet eine Stand-by-Zeit, die es braucht, damit auch bei ausgeschaltetem Motor der Zieldruckwert erreicht wird, falls der Druck im Treibstofftank (100) den Zieldruckwert nicht erreicht hat.

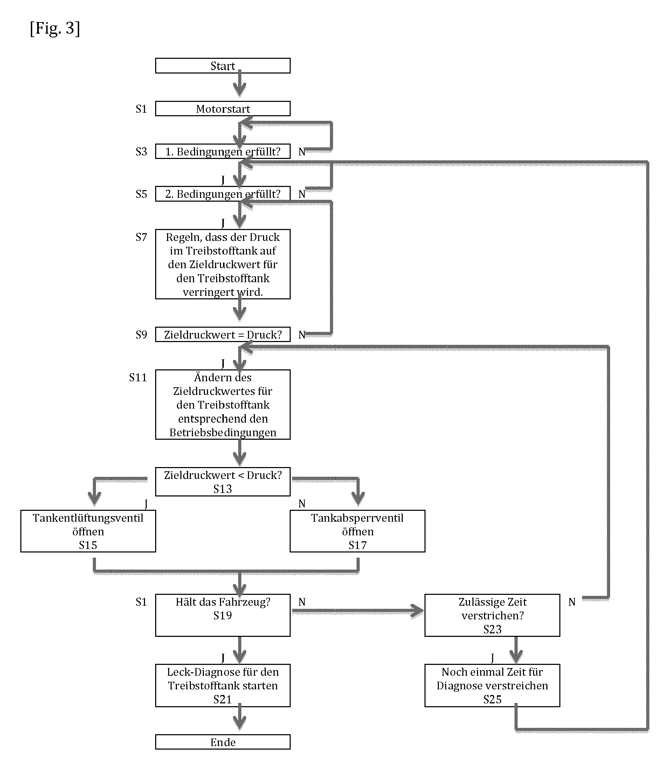

Abbildung 3 ist ein Ablaufschema, welches den Betriebsablauf einer wie in Abbildung 1 gezeigten Diagnosevorrichtung als ein Ausführungsbeispiel darstellt. Wie in Abbildung 3 nur als Beispiel beschrieben, umfasst der Ablauf folgende Stufen:
eine 1. Beurteilungsstufe, in der beurteilt wird, ob die 1. Bedingungen erfüllt sind, um in der Diagnosevorrichtung den Druck im Treibstofftank eines in Betrieb befindlichen Fahrzeugs zu regeln;
eine 2. Beurteilungsstufe, in der beurteilt wird, ob die 2. Bedingungen erfüllt sind, um die Regelung für den Druck im Treibstofftank eines im Betriebszustand befindlichen Fahrzeugs zu starten, sobald o. g. 1. Bedingungen erfüllt sind;
eine Druckregelungsstufe, in der der Druck in o. g. Treibstofftank an den vorab festgelegten o. g. Zieldruckwert für den Treibstofftank angepasst wird, sobald o. g. 2. Bedingungen erfüllt sind;
sowie eine Leck-Diagnosestufe, in der ausgehend von dem Druck im Treibstofftank, der o. g. Zieldruckwert erreicht hat, eine Leck-Diagnose für o. g. Treibstofftank durchgeführt wird, sobald das Fahrzeug anhält.

Weiterhin umfasst o. g. Methode auch eine Stufe, in der - sobald Änderungen bei den von o. g. im Betriebszustand befindlichen Fahrzeug abgegebenen Betriebsdaten vorliegen - entsprechend den veränderten Betriebsdaten der Zieldruckwert des Treibstofftanks geändert wird.

Dabei beinhalten o. g. Betriebsdaten mehr als 1 der Daten zu Fahrzeuggeschwindigkeit, Luftansaugmenge und Motorlast.

Andererseits umfassen die 1. Bedingungen mehr als 1 der folgenden Abfragen: Ist bei der Tankentlüftungsventil, Tankabsperrventil, Tankdrucksensor und Tankfüllstandsensor umfassenden Diagnosevorrichtung für Lecks bei Treibstofftanks ein Fehler aufgetreten? Wurde die Kühltemperatur des Treibstoffs unterhalb einer vorab festgelegten Temperatur gemessen? Liegt die elektrische Spannung der Batterie innerhalb des Bereiches, der vorab für die Spannung bei Normalbetrieb festgelegt worden ist? Liegt die gemessene Treibstoffmenge innerhalb des Bereiches, der vorab für die messbare Treibstoffmenge festgelegt worden ist? Muss innerhalb einer bestimmten Zeit getankt werden?

Des Weiteren umfassen die 2. Bedingungen mehr als 1 der folgenden Abfragen: Ist die Öffnungssteuerung für das Tankentlüftungsventil wiederholt durchlaufen, um den Druck in o. g. Treibstofftank zu verringern? Wurde der für das Öffnen des Tankentlüftungsventils vorab festgelegte Level erreicht? Liegt der Druck in o. g. Treibstofftank innerhalb des vorab festgelegten Toleranzbereichs? Liegen die Veränderungen beim Druck in o. g. Treibstofftank innerhalb der vorab festgelegten Variabilitätsspanne? Liegt die Motorlast unterhalb der vorab festgelegten Last?

O. g. Druckregelungsstufe ist so gestaltet, dass sie durch die Öffnungssteuerung für das Tankentlüftungsventil den Druck in o. g. Treibstofftank verringert, sobald o. g. Zieldruckwert überschritten wird und sich dadurch Druck in o. g. Treibstofftank aufbaut.

Andererseits ist o. g. Druckregelungsstufe so aufgebaut, dass sie durch die Öffnungssteuerung für das Tankabsperrventil den Druck in o. g. Treibstofftank erhöht, sobald ein Druck in o. g. Treibstofftank entsteht, der unterhalb des o. g. Zieldruckwertes liegt.

O. g. Druckregelungsstufe ist so ausgestattet, dass sie anschließend eine Anpassung für den Druck in o. g. Treibstofftank durchführt, sofern der Fehlerwert - das Ergebnis aus dem Vergleich zwischen dem Wert des Drucks in o. g. Treibstofftank und dem o. g. Zieldruckwert - außerhalb der vorab eingestellten Hysterese (Hysteresis) liegt.

Dabei ist o. g. Leck-Diagnosestufe so ausgestattet, dass sie die Leck-Diagnose für o. g. Treibstofftank unterbricht, bis der Druck in o. g. Treibstofftank o. g. Zieldruckwert erreicht, sofern beim Anhalten des Fahrzeugs eine Verringerung des Drucks in o. g. Treibstofftank auf o. g. Zieldruckwert nicht erreicht worden ist.

Infolge eines solchen Aufbaus beurteilt die Diagnosemethode für Lecks am Treibstofftank (100), ob die für die Diagnose eines Lecks am Treibstofftank (100) nach dem Fahrzeugstart erforderlichen 1. Bedingungen erfüllt sind (S1 bis S3).

Danach, sofern die 1. Bedingungen erfüllt sind, wird beurteilt, ob die 2. Bedingungen - welche auslösen, dass der Druck des Treibstofftanks (100) im Betriebszustand geregelt wird - erfüllt sind (S5).

Sofern in Stufe S5 die 2. Bedingungen erfüllt sind, wird geregelt, dass der Druck im Treibstofftank (100) auf den den Betriebsbedingungen des Fahrzeugs (z.B. Fahrzeuggeschwindigkeit) entsprechend eingestellten Zieldruckwert des Treibstofftanks (100) verringert wird (S7).

Dabei läuft die Regelung so, dass der Druck im Treibstofftank (100) den Zieldruckwert beibehält, und sobald die Betriebsbedingungen des Fahrzeugs (z.B. die Fahrzeuggeschwindigkeit) verändert werden, wird auch der Zieldruckwert des Treibstofftanks (100) geändert (S11).

In dieser Weise wird ein Prozess durchlaufen, in dem durch Öffnen des Tankentlüftungsventils (220) der Druck im Treibstofftank (100) verringert wird, sobald der Druck im Treibstofftank (100) höher ist als der geänderte Zieldruckwert (S13 bis S15), und in dem andererseits durch Öffnen des Tankabsperrventils (210) der Druck im Treibstofftank (100) erhöht wird, sobald der Druck im Treibstofftank (100) niedriger ist als der geänderte Zieldruckwert (S17).

Danach, wenn das Fahrzeug hält, beginnt - ausgehend von dem bei o. g. Prozess gebildeten Druck im Treibstofftank (100) - die Leck-Diagnose für den Treibstofftank (100) (S19 bis S21).

Ferner wird in Stufe S19, falls das Fahrzeug nicht hält, die Abfrage, ob die bereits festgelegte zulässige Zeit verstrichen ist, zum Standard und damit als Startpunkt für die anschließend zum Fortfahren aufrufende Logik eingestellt.

Das bedeutet, wenn die zulässige Zeit verstrichen ist, wird die Stufe, in der wieder über die Erfüllung der die Druckregelung für den Treibstofftank (100) auslösenden 2. Bedingungen entschieden wird, als Startpunkt für die anschließende Logik eingestellt, und wenn innerhalb der zulässigen Zeit die Druckregelung für den Treibstofftank (100) entsprechend den Betriebsbedingungen (z.B. Fahrzeuggeschwindigkeit) erfolgt ist, dann wird die Stufe, in der die Regelung für den Druck im Treibstofftank (100) stattfindet, als Startpunkt für die anschließende Logik eingestellt (S23 bis S25).

Oben stehende Beschreibungen erfolgen unter Bezug auf bevorzugte Ausführungsbeispiele für vorliegende Erfindung, jedoch ist es so zu verstehen, dass Personen, die im entsprechenden technischen Gebiet bewandert und tätig sind, die vorliegende Erfindung auf verschiedene Weise verändern oder verbessern können und zwar in einem Umfang, der nicht von der in nachfolgenden angeführten Ansprüchen festgehaltenen Idee und Wirkungsbereich der vorliegenden Erfindung abweicht.

Industrielle Anwendungsmöglichkeiten

Außerdem ist vorliegende Erfindung - aufgrund der Tatsache, dass sie direkt beim Anhalten des Fahrzeugs die Durchführung einer Leck-Diagnose für den Treibstofftank ermöglicht, dadurch dass sie den Druck im Treibstofftank eines in Betrieb befindlichen Fahrzeugs einem der Leck-Prüfung am Treibstofftank entsprechenden Druck anpasst -
für industrielle Anwendungsmöglichkeiten geeignet, denn vorliegende Erfindung verfügt nicht nur über Markttauglichkeit und Geschäftspotenzial, sondern kann auch tatsächlich klar und deutlich umgesetzt werden.

## Patentansprüche

1. Diagnosemethode für Lecks bei Treibstofftanks, **dadurch gekennzeichnet, dass** sie eine Stufe für die Beurteilung der 1. Bedingungen umfasst, in der beurteilt wird, ob die 1. Bedingungen erfüllt werden, damit die Diagnosevorrichtung den Status der Basisparameter überprüft, die bei Betrieb des Fahrzeugs für die Kontrolle des Drucks im Treibstofftank erforderlich sind;
falls obige 1. Bedingungen erfüllt werden, eine Stufe für die Beurteilung der 2. Bedingungen umfasst, in der beurteilt wird, ob die 2. Bedingungen erfüllt werden, wodurch beurteilt wird, ob mit der Kontrolle des obigen Drucks begonnen werden soll;
falls obige 2. Bedingungen erfüllt werden, eine Stufe für die Regulierung des Zieldruckwertes, in der der Zieldruckwert des obigen Treibstofftanks entsprechend den Betriebsbedingungen des Fahrzeugs reguliert wird, sowie eine Stufe für die Druckkontrolle umfasst, in der die Entstehung obigen Drucks im Verhältnis zu obigem Zieldruckwert kontrolliert wird.

2. Diagnosemethode für Lecks bei Treibstofftanks nach Anspruch 1, **dadurch gekennzeichnet, dass** obige Diagnosemethode für Lecks bei Treibstofftanks zusätzlich eine Stufe für die Leckdiagnose umfasst, in der die Leckdiagnose bei obigem Treibstofftank auf der Basis obigen Drucks bei Stillstand des obigen Fahrzeugs begonnen wird.

3. Diagnosemethode für Lecks bei Treibstofftanks nach Anspruch 1 oder Anspruch 2, **dadurch gekennzeichnet, dass** obige 1. Bedingungen mehr als eine der folgenden Bedingungen umfassen: ob bei den Vorrichtungen zur Diagnose von Lecks bei Treibstofftanks ein Fehler auftritt, ob der Treibstoff gekühlt ist, ob beim Anlassen des Motors die Außentemperaturbedingungen erfüllt werden, ob die Batteriespannung ausreichend ist, ob die Treibstoffmenge ausreichend ist sowie Treibstoff eingefüllt wurde.

4. Diagnosemethode für Lecks bei Treibstofftanks nach Anspruch 1 oder Anspruch 2, **dadurch gekennzeichnet, dass** obige 2. Bedingungen mehr als eine der folgenden Bedingungen umfassen: ob eine Kontrolle der schrittweisen Öffnung des Kanister-Entleerventils stattgefunden hat, ob die Stufe der maximalen Öffnung des obigen Kanister-Entleerventils durchgeführt wurde, ob obiger Druck im vorab festgelegten Zulassungsbereich liegt, ob die Veränderungen des obigen Drucks im vorab festgelegten Bereich der Veränderungen liegen, ob der Motor nicht über den vorab festgelegten Lastbereich hinaus überlastet wird.

5. Diagnosemethode für Lecks bei Treibstofftanks nach Anspruch 1 oder Anspruch 2, **dadurch gekennzeichnet, dass** bei obiger Stufe für die Druckkontrolle, falls obiger Druck höher ist als obiger Zieldruckwert, obiger Druck durch Öffnen des Kanister-Entleerventils reduziert wird.

6. Diagnosemethode für Lecks bei Treibstofftanks nach Anspruch 1 oder Anspruch 2, **dadurch gekennzeichnet, dass** bei obiger Stufe für die Druckkontrolle, falls obiger Druck niedriger ist als obiger Zieldruckwert, obiger Druck durch Öffnen des Kanister-Absperrventils erhöht wird.

7. Diagnosemethode für Lecks bei Treibstofftanks nach Anspruch 1 oder Anspruch 2, **dadurch gekennzeichnet, dass** bei obiger Stufe für die Druckkontrolle, falls obiger Druck im Vergleich zu obigem Zieldruckwert innerhalb der Hysteresis liegt, bei dem Kanister-Entleerventil oder dem Kanister-Absperrventil eine Kontrolle der Öffnung nicht durchgeführt wird, und falls obiger Druck im Vergleich zu obigem Zieldruckwert außerhalb der Hysteresis liegt, bei obigem Kanister-Entleerventil oder bei obigem Kanister-Absperrventil eine Kontrolle der Öffnung durchgeführt wird.

8. Diagnosemethode für Lecks bei Treibstofftanks nach Anspruch 1 oder Anspruch 2, **dadurch gekennzeichnet, dass** obige Betriebsbedingungen mehr als eine der folgenden Bedingungen umfassen:
Geschwindigkeit, Einsaugluftmenge sowie Motorlast des obigen Fahrzeugs.

9. Diagnosemethode für Lecks bei Treibstofftanks nach Anspruch 2, **dadurch gekennzeichnet, dass** bei obiger Stufe für die Leckdiagnose, falls bei Stillstand des obigen Fahrzeugs obiger Druck bis zum obigen Zieldruckwert, der entsprechend dem Stillstand des obigen Fahrzeugs festgelegt wurde, nicht reduziert wird, die Leckdiagnose des obigen Treibstofftanks verschoben wird, bis obiger Druck durch Öffnen des Kanister-Entleerventils obigen Zieldruckwert erreicht.

10. Diagnosevorrichtung für Lecks bei Treibstofftanks, **dadurch gekennzeichnet, dass** sie einen 1. Beurteilungsbereich umfasst, in dem beurteilt wird, ob die 1. Bedingungen erfüllt werden, damit der Status der Basisparameter überprüft wird, die für die Kontrolle des Drucks im Treibstofftank beim Betrieb des Fahrzeugs erforderlich sind;
falls obige 1. Bedingungen erfüllt werden, einen 2. Beurteilungsbereich umfasst, in dem beurteilt wird, ob die 2. Bedingungen erfüllt werden, wodurch beurteilt wird, ob mit der Kontrolle des obigen Drucks begonnen werden soll;
falls obige 2. Bedingungen erfüllt werden, einen Regulierungsbereich, in dem der Zieldruckwert des obigen Treibstofftanks entsprechend den Betriebsbedingungen des Fahrzeugs reguliert wird, sowie einen Kontrollbereich umfasst, in dem die Entstehung obigen Drucks im Verhältnis zu obigem Zieldruckwert kontrolliert wird.

11. Diagnosevorrichtung für Lecks bei Treibstofftanks nach Anspruch 10, **dadurch gekennzeichnet, dass** obige Diagnosevorrichtung für Lecks bei Treibstofftanks zusätzlich einen Diagnosebereich umfasst, in dem die Leckdiagnose bei obigem Treibstofftank auf der Basis obigen Drucks bei Stillstand des obigen Fahrzeugs begonnen wird.
